# EUROPEAN PATENT APPLICATION

(11) **EP 4 618 406 A1**
(43) Date of publication of application: **17.09.2025**
(21) Application number: 24200042.0
(22) Date of filing: 12.09.2024
(51) Int. Cl.: H02S 30/00, F24S 25/33, F24S 25/61, F24S 25/63, F24S 25/636

(54) **QUICK INSTALLATION PRESSING BLOCK**

(30) Priority: 12.03.2024 CN 202410276268
(71) Applicant: Trina Solar Co., Ltd, Changzhou, Jiangsu 213031 (CN)
(72) Inventor: RU, Qiang, Changzhou, 213031 (CN); CHEN, Guoliang, Changzhou, 213031 (CN); PANG, Yuewen, Changzhou, 213031 (CN)
(74) Representative: Nederlandsch Octrooibureau

(57) **Abstract**

This application provides a quick installation pressing block, which comprises a roof plate having a first pressing plate and a second pressing plate adjacent in a first direction; a support chucking part having an installation part, a supporting part and a chucking part, the installation part and the chucking part are respectively connected to two opposite ends of the supporting part in a second direction, and the installation part and the chucking part are respectively located on a left side and a right side of the supporting part in the first direction, a lower end of the supporting part is in contact with a rail; a rail connector connected to the rail; and a fastener, wherein one end of the fastener passes through the roof plate and the installation part in sequence and connects to the rail connector, when the fastener is in a tightened state and the chucking part does not clamp a frame of a photovoltaic module, at least part of the chucking part is above an upper surface of the rail. The quick installation pressing block of the present application is beneficial to improve construction efficiency, in addition, it can prevent construction workers from stepping on photovoltaic modules, and can be adapted to photovoltaic module frames of different widths.

## Description

### Technical Field

The present application mainly relates to photovoltaic module installation field, particularly a quick installation pressing block.

### Background

Photovoltaic modules are important components of photovoltaic power stations, usually photovoltaic modules need to be installed and fixed on the bracket, for example, the frame in the photovoltaic module is connected to the bracket through bolts, or the frame in the photovoltaic module is pressed against the bracket by using a pressing block. Pressing block has a significant impact on the installation efficiency and construction difficulty of photovoltaic modules and on avoiding damage to photovoltaic modules due to construction. For example, when installing photovoltaic modules using existing pressing blocks, you need to place the two photovoltaic modules first, and then install the middle pressing blocks (blocks located between two adjacent photovoltaic modules), e.g., fasten the middle pressing blocks to the bracket using bolts. As the size of photovoltaic modules becomes larger and larger, especially when installing photovoltaic modules on roofs, when installers install middle pressing blocks, they need to reach across the photovoltaic modules to tighten the bolts, but it is difficult for the arms to reach across the photovoltaic modules, therefore construction and installation personnel will step on the photovoltaic modules to bring their arms close to the position where they can tighten the bolts, stepping on the photovoltaic modules may cause damage to the photovoltaic modules. In addition, the width and size of the C-side of module frames of different manufacturers on the market vary, most of the existing quick installation pressing blocks fix the photovoltaic module frame by applying pressure to the photovoltaic module frame in a direction parallel to the photovoltaic module, the quick installation pressing block with this fixed method cannot adapt to C-side of different widths, and the conventional pressing block installation method is time-consuming and less convenient. In addition, when using quick installation pressing blocks to install photovoltaic modules, the arrangement of adjacent photovoltaic modules is not well aligned, making it difficult to disassemble the photovoltaic modules for replacement and maintenance.

### Summary

The technical problem to be solved by the present invention is to provide a quick installation pressing block, the quick installation pressing block is beneficial to improve construction efficiency. In addition, it can prevent construction workers from stepping on photovoltaic modules, and is suitable for photovoltaic module frames with different widths.

In order to solve the above technical problems, the present application provides a quick installation pressing block which includes, a roof plate having a first pressing plate and a second pressing plate adjacent in a first direction; a support chucking part having an installation part, a supporting part and a chucking part, the installation part and the chucking part are respectively connected to two opposite ends of the supporting part in a second direction, the installation part and the chucking part are respectively located on a left side and a right side of the supporting part in the first direction, a lower end of the supporting part is in contact with a rail; a rail connector connected to the rail; and a fastener, wherein one end of the fastener passes through the roof plate and the installation part in sequence and connects to the rail connector, when the fastener is in a tightened state and the chucking part does not clamp a frame of a photovoltaic module, at least part of the chucking part is above an upper surface of the rail.

In one embodiment of the present application, the roof plate has a locating groove, an opening of the locating groove faces the installation part, the support chucking part has a locating boss, and the locating boss protrudes toward the roof plate, the locating boss is embedded in the locating groove.

In one embodiment of the present application, the roof plate has a first through hole, the installation part has a second through hole, one end of the fastener passes through the first through hole and the second through hole in sequence and connects to the rail connector.

In one embodiment of the present application, the supporting part has a first step structure and a second step structure, the first step structure and the second step structure are located at a lower end of the supporting part and are oppositely arranged in a third direction, wherein the first step structure and the second step structure are in contact with the rail.

In one embodiment of the present application, the rail connector includes a first clamping part, a connecting part and a second clamping part, the first clamping part and the second clamping part respectively connects to two opposite ends of the connecting part in a third direction, the first clamping part and the second clamping part extend toward the rail, the first clamping part and the second clamping part are clamped with the rail.

In one embodiment of the present application, the connecting part has an internal thread, the fastener is bolted to the rail connector through the internal thread.

In one embodiment of the present application, the rail connector also has a first blocking part and a second blocking part, one end of the first blocking part connects to the first clamping part, another end the first blocking part extends toward the second clamping part, one end of the second blocking part connects to the second clamping part, another end of the second blocking part extends toward the first clamping part.

In one embodiment of the present application, a bottom surface of the second pressing plate is higher than a bottom surface of the first pressing plate, a height difference between the bottom surface of the second pressing plate and the bottom surface of the first pressing plate is equal to or less than a height of a part of the chucking part above the upper surface of the rail.

In one embodiment of the present application, the pressing block further includes an elastic part, one end of the elastic part is in contact with the rail connector, and another end of the elastic part is in contact with the support chucking part, the roof plate or the fastener.

In one embodiment of the present application, the elastic part includes a spring, and one end of the fastener passes through the spring and connects to the rail connector.

In one embodiment of the present application, the chucking part includes a base plate and a protruding thorn, one end of the base plate connects to the supporting part, and anther end of the base plate extends away from the supporting part, one end of the protruding thorn connects to the base plate, another end extends of the protruding thorn extends toward the second pressing plate, when the fastener is in the tightened state and the clamping part does not clamp the frame, the base plate is below or flushes with the upper surface of the rail, and at least part of a protruding thorn is above the upper surface of the rail.

In one embodiment of the present application, the protruding thorn is elastic.

The quick installation pressing block of this application has the following technical effects:
(1) The fastener in the quick installation pressing block pass through the roof plate and the support chucking part in sequence and connects to the rail connector, so that the various components in the quick installation pressing block are connected together to form an integrated structure. In this way, when using quick installation pressing blocks to fix photovoltaic modules, it is no longer necessary to connect the various components together at the construction site, which is beneficial to improve construction efficiency, the integrated structure also improves the portability of the quick installation pressing block, which makes it easier for construction workers to carry it.
(2) When using pressing blocks in the prior art to fix photovoltaic modules, construction workers will step on the photovoltaic modules to fix the pressing blocks on the bracket. In contrast, the base plate in the quick installation pressing block is below the upper surface of the rail, during the process of pushing the photovoltaic module into the quick installation pressing block, the photovoltaic module will not be blocked by other parts except for the protruding thorn, and the protruding thorn will bend and deform downward under the squeeze of the photovoltaic module, therefore, construction workers can push the photovoltaic module into the quick installation pressing block to fix the photovoltaic module, which can prevent construction workers from stepping on the photovoltaic module.
(3) Most of the existing quick installation pressing block fix the photovoltaic module frame by applying pressure to the photovoltaic module frame in a direction parallel to the photovoltaic module, in contrast, this application applies upward pressure to the photovoltaic module frame through the chucking part to clamp the photovoltaic module frame, for C-sides with different widths, the chucking part can apply upward pressure to the C-side to clamp the photovoltaic module frame, therefore, the quick installation pressing block of the present application is suitable for photovoltaic module frames with" different widths. In addition, after removing the photovoltaic module frame, the chucking part can return to its original state, when the quick installation pressing block is used again to fix the photovoltaic module frame, the chucking part can still apply upward pressure to the photovoltaic module frame to clamp the photovoltaic module frame, so the quick installation pressing block of the present application can be used repeatedly.

### Brief Description of the Drawings

The drawings are included to provide a further understanding of the present application, and they are included and constitute a part of the present application, the drawings show the embodiments of the present application, and serving to explain the principles of the present application together with the description. In the drawings:
Fig. 1 and Fig. 2 are three-dimensional schematic diagrams of using pressing blocks to fix photovoltaic modules in an embodiment of the present application;
Fig. 3 is a schematic three-dimensional view of a quick installation pressing block in an embodiment of the present application;
Fig. 4 is a schematic front view of a quick installation pressing block in an embodiment of the present application;
Fig. 5 is a schematic side view of a quick installation pressing block in an embodiment of the present application;
Fig. 6 is an exploded view of a quick installation pressing block in an embodiment of the present application;
Fig. 7 is a three-dimensional schematic view of the support chucking part in an embodiment of the present application;
Fig. 8 is a schematic front view of the support chucking part in an embodiment of the present application;
Fig. 9 is a three-dimensional schematic view of a rail connector in an embodiment of the present application;
Fig. 10 is a schematic front view of a rail connector in an embodiment of the present application;
Figs. 11-13 are schematic diagrams of the process of connecting a rail connector to a rail in an embodiment of the present application;
Figs. 14-16 are schematic diagrams of the process of fixing photovoltaic modules using the quick installation pressing block in an embodiment of the present application.

Reference signs: first pressing block 10, first photovoltaic module 20, first frame 21, second frame 22, rail 30, upper surface 31, first lapping surface 32, second lapping surface 33, first protrusion 34, second protrusion 35, second photovoltaic module 40, first frame 41, lower frame 41a, upper frame 41b, second frame 42, quick installation pressing block 100, roof plate 110, first pressing plate 111, first bottom surface 111a, second pressing plate 112, second bottom surface 112a, locating groove 113, first through hole 114, main part 115, first tooth structure 116, second tooth structure 117, support chucking part 120, installation part 121, second through hole 121a, supporting part 122, first step structure 122a, second step structure 122b, protruding part 122c, chucking part 123, base plate 123a, protruding thorn 123b, locating boss 124, rail connector 130, first clamping part 131, first groove 131a, connecting part 132, third through hole 132a, second clamping part 133, second groove 133a, first blocking part 134, second blocking part 135, fastener 140, tightening part 141, elastic part 150, washer 160.

### Preferred Embodiment of the Present Invention

In order to explain the technical solutions of the embodiments of the present application more clearly, the following will briefly introduce the drawings needed to describe the embodiments. Obviously, the drawings in the following description are only some examples or embodiments of the present application. For those of ordinary skill in the art, without exerting creative efforts, the present application can also be applied into other similar scenarios according to these drawings. Unless obvious from the locale or otherwise stated, the same reference numbers in the figures represent the same structure or operation.

As shown in this application and claims, words such as "a", "an", "an" and/or "the" do not specifically refer to the singular and may include the plural unless the context clearly indicates an exception. Generally speaking, the terms "comprising" and "including" only imply the inclusion of clearly identified steps and elements, and these steps and elements do not constitute an exclusive list. The method or apparatus may also include other steps or elements.

The relative arrangement of components and steps, numerical expressions, and numerical values set forth in these examples do not limit the scope of the application unless specifically stated otherwise. At the same time, it should be understood that, for convenience of description, the dimensions of various parts shown in the drawings are not drawn according to actual proportional relationships. Techniques, methods and devices known to those of ordinary skill in the relevant art may not be discussed in detail, but where appropriate, such techniques, methods and devices should be considered part of the authorized specification. In all examples shown and discussed herein, any specific values are to be construed as illustrative only and not as limiting. Accordingly, other examples of the exemplary embodiments may have different values. It should be noted that similar reference numerals and letters refer to similar items in the following figures, so that once an item is defined in one figure, it does not require further discussion in subsequent figures.

In the description of this application, it should be understood that the orientation indicated by directional words such as "front, back, up, down, left, right", "horizontal, vertical, vertical, horizontal" and "top, bottom", etc. Or the positional relationship is usually based on the orientation or positional relationship shown in the drawings, which are only for the convenience of describing the present application and simplifying the description. Without explanation to the contrary, these directional words do not indicate and imply the referred devices or components. It must have a specific orientation or be constructed and operated in a specific orientation, so it cannot be understood as limiting the scope of the present application; the orientation words "inside and outside" refer to the inside and outside relative to the outline of each component itself.

For the convenience of description, spatially relative terms can be used here, such as "on...", "above...", "on the upper surface of...", "on top of', etc., to describe the spatial relationship between one device or feature and other devices or features as shown in the figure. It should be understood that the spatially relative terms are intended to encompass different orientations of the device in use or operation in addition to the orientation depicted in the figures. For example, if a device in the figure is turned upside down, then one device described as "above other devices or configurations" or "on top of other devices or configurations" would then be oriented as "below other devices or configuration" or "beneath other devices or configurations". Thus, the exemplary term "over" may include both orientations "above" and "below." The device may be otherwise oriented (rotated 90 degrees or at other orientations) and the spatially relative descriptors used herein interpreted accordingly.

In addition, it should be noted that the use of words such as "first" and "second" to define parts is only to facilitate the distinction between corresponding parts. Unless otherwise stated, the above words have no special meaning and therefore cannot be understood as limiting the scope of protection of this application. In addition, although the terms used in this application are selected from well-known and commonly used terms, some terms mentioned in the specification of this application may be selected by the applicant based on his or her judgment, and their detailed meanings are set out in the relevant section of the description. Furthermore, the application is required to be understood not merely by the actual terms used, but also by the meaning connoted by each term.

Next, a quick installation pressing block of the present application will be described through embodiments.

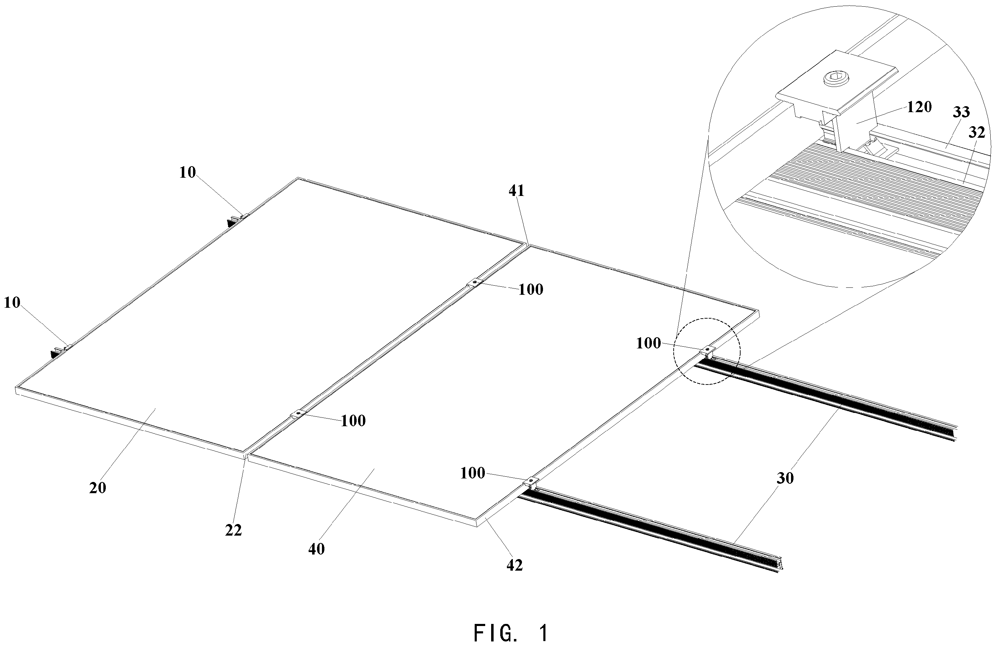

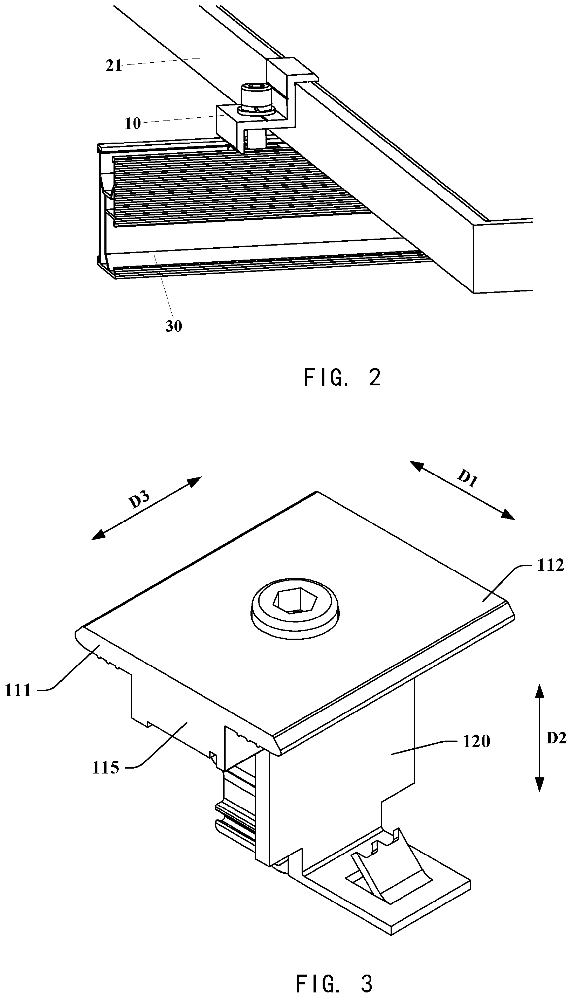

Fig. 1 and Fig. 2 are three-dimensional schematic diagrams of using pressing blocks to fix photovoltaic modules in an embodiment, Fig. 2 shows the pressing block located on the left in Fig. 1 more clearly. Referring to Fig. 1 and Fig. 2, two first pressing blocks 10 fix the first frame 21 of the first photovoltaic module 20 on the rails 30, two quick installation pressing blocks 100 fix the second frame 22 of the first photovoltaic module 20 on the rails 30, the two quick installation pressing blocks 100 also fix the first frame 41 of the second photovoltaic module 40 on the rails 30. Two quick installation pressing blocks 100 fix the second frame 42 of the second photovoltaic module 40 on the rails 30. It should be understood that the number of the first pressing block 10, the quick installation pressing block 100, the rail 30 and the photovoltaic module are not limited to the embodiments in Fig. 1 and Fig. 2, and can be set according to requirements, in addition, the first pressing block 10 may be a conventional pressing block different from the quick installation pressing block 100.

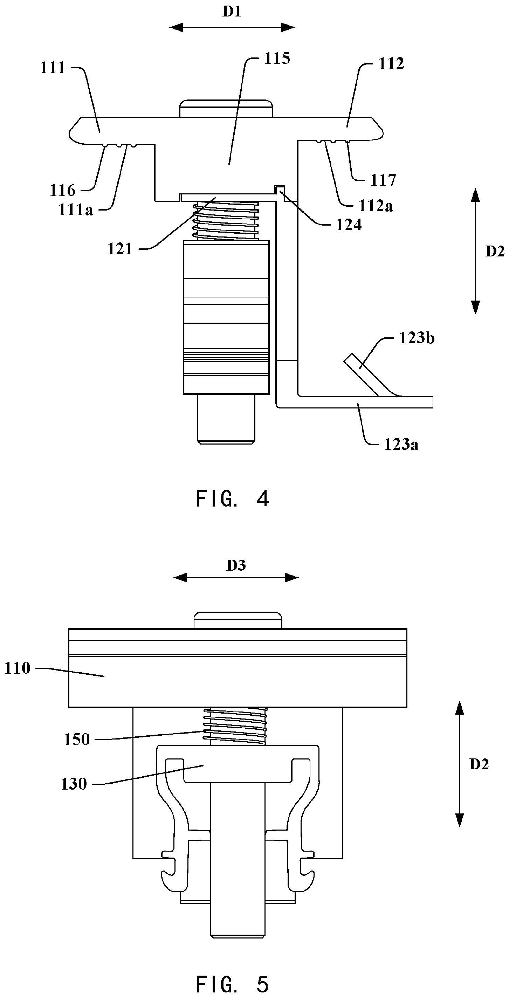

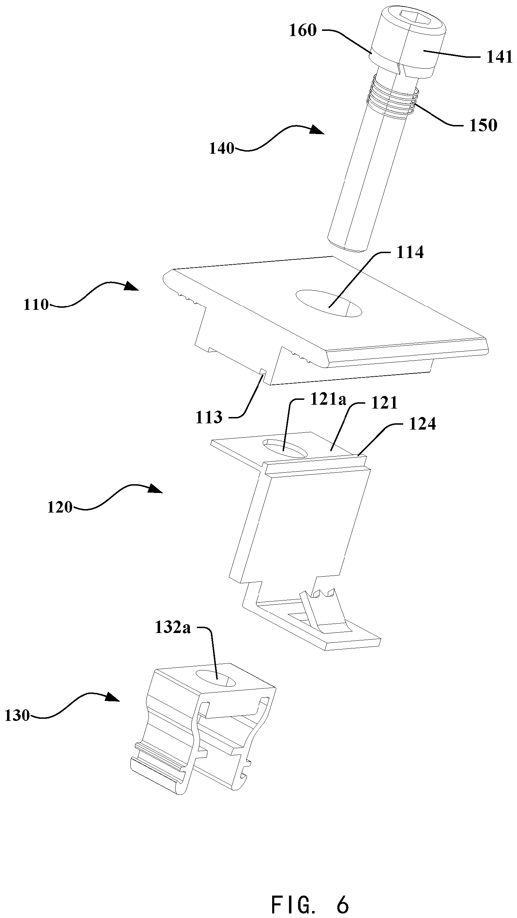

Fig. 3 is a schematic three-dimensional view of a quick installation pressing block in an embodiment, Fig. 4 is a schematic front view of a quick installation pressing block in an embodiment, Fig. 5 is a schematic side view of a quick installation pressing block in an embodiment, Fig. 6 is an exploded view of a quick installation pressing block in an embodiment. Referring to Figs. 3-6, the quick installation pressing block 100 includes a roof plate 110, a support chucking part 120, a rail connector 130 and a fastener 140, one end of the fastener 140 passes through the roof plate 110 and the support chucking part 120 in sequence and connects to the rail connector 130, the quick installation pressing block 100 fixes the photovoltaic modules located on both sides of it on the rail.

Specifically, referring to Fig. 3 and Fig. 4, the roof plate 110 has a first pressing plate 111, a second pressing plate 112 and a main part 115. One end of the first pressing plate 111 connects to the main part 115, and anther end of the first pressing plate 111 extends to the left. One end of the second pressing plate 112 connects to the main part 115, and another end of the second pressing plate 112 extends to the right. In some embodiments, the roof plate 110 may not include a main part 115, and the first pressing plate 111 and the second pressing plate 112 are connected together. A plurality of first tooth structures 116 can be provided on the first bottom surface 111a of the first pressing plate 111, the first tooth structure 116 can increase the friction between the first pressing plate 111 and photovoltaic module frame. Similarly, a plurality of second tooth structures 117 can be provided on the second bottom surface 112a of the second pressing plate 112, the second tooth structures 117 can increase the friction between the second pressing plate 112 and the photovoltaic module frame.

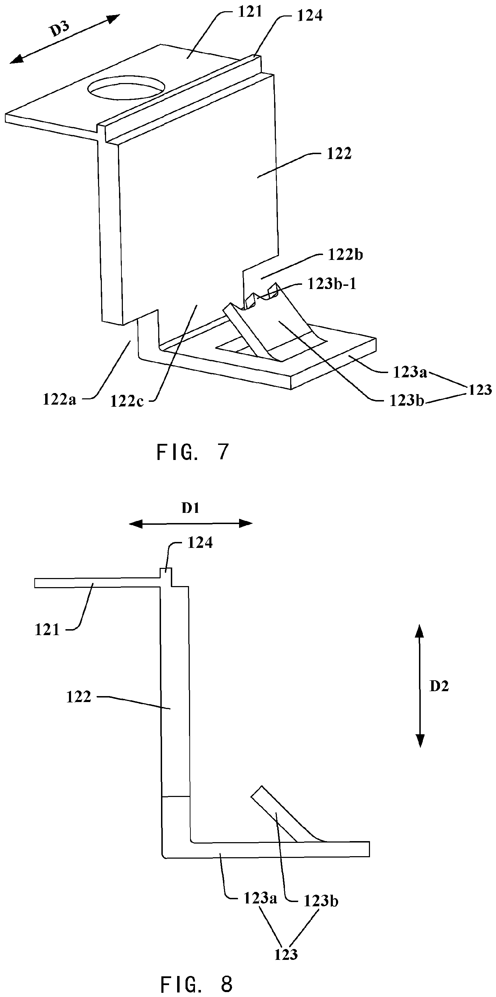

Refer to Fig. 7 for a three-dimensional schematic view of the support chucking part 120 in an embodiment, and Fig. 8 for a schematic front view of the support chucking part 120 in an embodiment. Referring to Fig. 7 and Fig.8, the supporting chucking part 120 has an installation part 121, a supporting part 122 and a chucking part 123. The installation part 121 and the chucking part 123 are arranged oppositely in the second direction D2, and the first direction D1 intersects the second direction D2. In Fig. 8, the right end of the installation part 121 connects to the upper end of the supporting part 122, and the left end of the installation part 121 extends to the left, the left end of the chucking part 123 connects to the lower end of the supporting part 122, and the right end of the chucking part 123 extends to the right. In the embodiment of Fig. 7 and Fig. 8, the main structure of the installation part 121, the supporting part 122 and the chucking part 123 is plate-shaped, the main structure of the installation part 121, the supporting part 122 and the chucking part 123 is not limited to a plate shape and can be set according to requirements. In addition, the position where the installation part 121 connects to the supporting part 122 and the position where the chucking part 123 connects the supporting part 122 is not limited to Fig. 7 and Fig. 8, and can be set according to requirements.

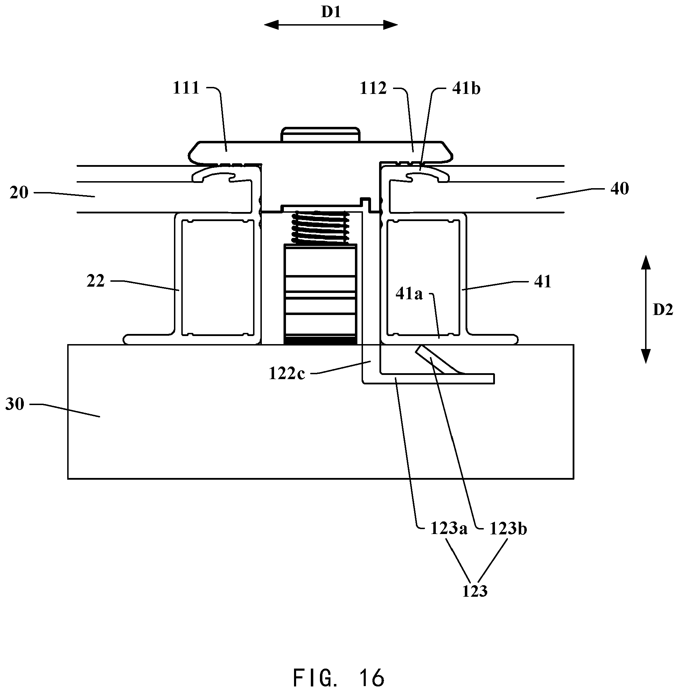

Referring to Fig. 16, which illustrates how the quick installation pressing block fixes the photovoltaic module. The chucking part 123 cooperates with the second pressing plate 112 to clamp the first frame 41 of the second photovoltaic module 40. Specifically, the chucking part 123 exerts upward pressure on the lower frame 41a (also called the C-side in the photovoltaic field) of the first frame 41, so that the first frame 41 is clamped between the chucking part 123 and the second pressing plate 112. The chucking part 123 is compatible with lower frames 41a of different widths (dimensions in the first direction D1), or in other words, the chucking part 123 is suitable for lower frames 41a with different widths. To expand, the chucking part 123 clamps the first frame 41 by exerting upward pressure on the lower frame 41a, instead of the way of applying pressure force on the first frame 41 in the first direction D1 (parallel to the photovoltaic module) to fix the first frame 41, therefore, even if the width of the lower frame 41a changes, the chucking part 123 can still clamp the first frame 41 by applying upward pressure to the lower frame 41a.

Referring to Fig. 4 and Fig. 6, in one embodiment, the roof plate 110 has a locating groove 113, the locating groove 113 is provided on the lower surface of the main part 115, and the opening of the locating groove 113 faces the installation part 121. Referring to Fig. 7 and Fig. 8, the support chucking part 120 has a locating boss 124, and the locating boss 124 protrudes toward the roof plate 110. When the photovoltaic module is fixed by the quick installation pressing block, the locating boss 124 is embedded in the locating groove 113. In Fig. 4, the locating boss 124 can have a clearance fit with the locating groove 113. In some other embodiments, the locating boss 124 may also be an interference fit with the locating groove 113.

Continuing to refer to Fig. 7 and Fig. 8, in one embodiment, the chucking part 123 includes a base plate 123a and a protruding thorn 123b. In Fig. 8, the left end of the base plate 123a connects to the supporting part 122, and the right end of the base plate 123a extends to the right (That is, extending away from the supporting part 122 in the first direction D1). As shown in Fig. 4 and Fig. 8, the lower end of the protruding thorn 123b connects to the base plate 123a, and the upper end of the protruding thorn 123b extends toward the second pressing plate 112, or in other words, the upper end of the protruding thorn 123b extends upward.

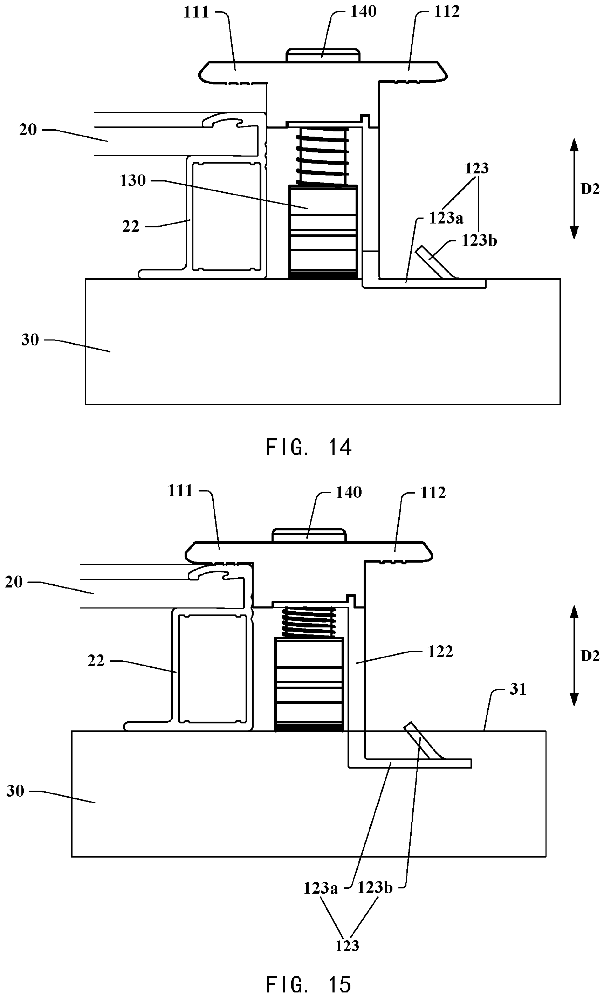

Fig. 15 illustrates the quick installation pressing block when the fastener 140 is in a tightened state and the chucking part 123 does not clamp the photovoltaic module, in the state of Fig. 15, the base plate 123a is below the upper surface 31 of the rail 30, and the upper part of the protruding thorn 123b is above the upper surface 31 of the rail 30. In some embodiments, the protruding thorn 123b is elastic, referring to Fig. 15 and Fig. 16, the protruding thorn 123b will bend and deform downward after being squeezed by the lower frame 41a, and the protruding thorn 123b will exert upward pressure on the lower frame 41a, after the lower frame 41a is removed, the protruding thorn 123b can be restored to the state shown in Fig. 15, so that the protruding thorn 123b can be used repeatedly.

Referring to Fig. 7 and Fig. 16, the lower end of the supporting part 122 is in contact with the rail 30. Specifically, referring to Fig. 7, the supporting part 122 has a first step structure 122a and a second step structure 122b. The first step structure 122a and the second step structure 122b are located on both sides of the protruding part 122c on the third direction D3, and are located at the lower end of the supporting part 122. Referring to Fig.1 and Fig. 7, the rail 30 has adjacent first lapping surface 32 and second lapping surface 33, the downward surface of the first step structure 122a is in contact with the first lapping surface 32, the downward surface of the second step structure 122b is in contact with the second lapping surface 33. Referring to Fig. 1 and Fig. 16, the protruding part 122c extends into the interior of the rail 30.

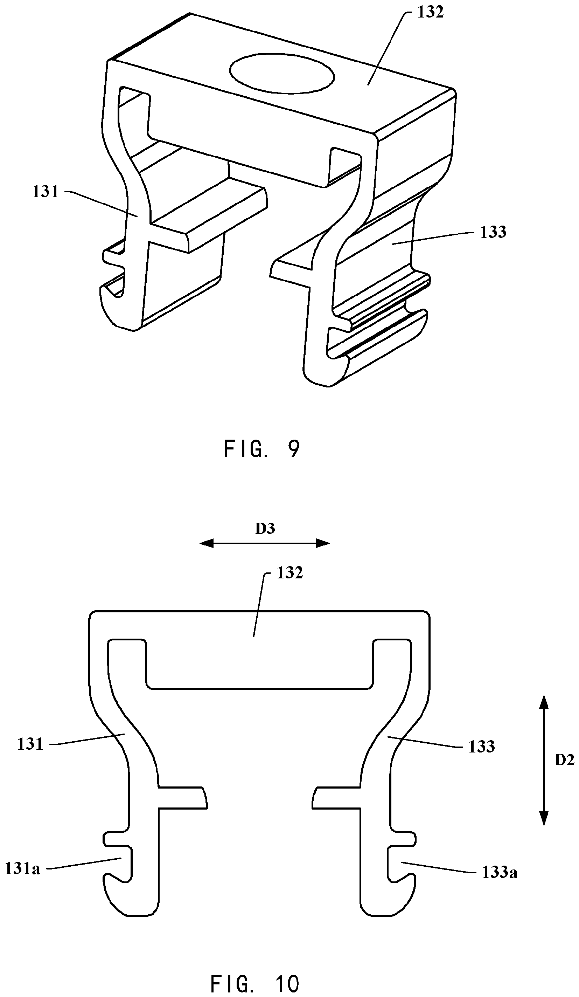

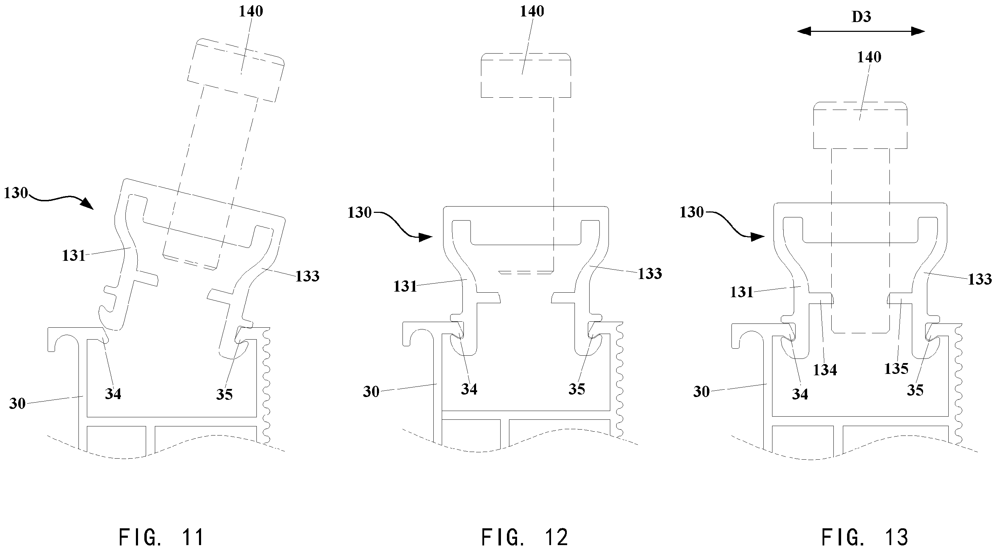

Fig. 9 is a three-dimensional schematic view of a rail connector in an embodiment, and Fig. 10 is a schematic front view of a rail connector in an embodiment, Figs. 11-13 are schematic diagrams of the process of connecting a rail connector to a rail in an embodiment. As shown in Fig. 13, the rail connector 130 connects to the rail 30. Expanded, referring to Fig. 9 and Fig. 10, the rail connector 130 has a first clamping part 131, a connecting part 132 and a second clamping part 133, the first clamping part 131 and the second clamping part 133 are relative to the other on the third direction D3, the upper end of the first clamping part 131 connects to the left end of the connecting part 132, and the lower end of the first clamping part 131 extends downward, the upper end of the second clamping part 133 connects to the right end of the connecting part 132, and the lower end of the second clamping part 133 extends downward. As shown in Fig. 13, after the rail connector 130 connects to the rail 30, the lower end of the first clamping part 131 and the lower end of the second clamping part 133 extends toward the rail 30.

Referring to Fig. 10, the first clamping part 131 has a first groove 131a, and the opening of the first groove 131a faces the left. The second clamping part 133 has a second groove 133a, and the opening of the second groove 133a faces the right. Referring to Fig. 11, rail 30 has a first protrusion 34 and a second protrusion 35, and the first protrusion 34 and the second protrusion 35 are arranged oppositely. Referring to Fig. 10 to Fig. 12, the rail connector 130 can be connected to the rail 30 in the following manner: first, as shown in Fig. 11, the second protrusion 35 is inserted into the second groove 133a; next, as shown in Fig. 12, the first clamping part 131 and the second clamping part 133 are elastic, and the first protrusion 34 is clamped into the first groove 131a by squeezing the first clamping part 131 and the second clamping part 133. It should be noted that the structure of the rail connector 130 is not limited to the above-mentioned embodiment, the rail connector 130 can also be other structures that can be connected to the rail and do not violate the technical concept of the present application.

Referring to Fig. 6, the lower end of the fastener 140 passes through the roof plate 110 and the installation part 121 in sequence and is connected to the rail connector 130. In one embodiment, the roof plate 110 has a first through hole 114, and the installation part 121 has a second through hole 121a, the lower end of the fastener 140 passes through the first through hole 114 and the second through hole 121a in sequence and is connected to the rail connector 130.

In some embodiments, internal threads are formed on the inner circumferential surface of the third through hole 132a in the connecting part 132, correspondingly, the lower end of the fastener 140 has external threads, the fastener 140 and the rail connector 130 are bolted through the above threads. It should be noted that the connection method between the fastener 140 and the rail connector 130 is not limited to bolting, for example, the fastener 140 can also be connected to the rail connector 130 by snapping. The fastener 140 may have a tightening part 141 located at an upper end of the fastener 140, and the tightening part 141 may be used to twist the fastener 140. The tightening part 141 cannot pass through the first through hole 114.

Referring to Fig. 4 to Fig. 6, in one embodiment, the quick installation pressing block further includes an elastic part 150, the lower end of the elastic part 150 is in contact with the rail connector 130, the upper end of the elastic part 150 is in contact with the installation part 121 of the support chucking part 120, the main part 115 of the roof plate 110 or the tightening part 141 of the fastener 140. Specifically, if the inner diameter of the second through hole 121a and the inner diameter of the first through hole 114 are greater than or equal to the outer diameter of the elastic part 150, then the upper end of the elastic part 150 is in contact with the tightening part 141, if the inner diameter of the second through hole 121a is greater than or equal to the outer diameter of the elastic part 150, and the inner diameter of the first through hole 114 is less than the outer diameter of the elastic part 150, then the upper end of the elastic part 150 is in contact with the main part 115, if the inner diameter of the second through hole 121a is smaller than the outer diameter of the elastic part 150, the upper end of the elastic part 150 comes into contact with the installation part 121. When the positioning part 124 is in clearance fit with the locating groove 113, the upper end of the elastic part 150 can contact the installation part 121, thereby preventing the support chucking part 120 from falling, which is beneficial to the installation of the quick installation pressing block.

In the embodiment of Fig. 4 to Fig. 6, the elastic part 150 is a spring, and the lower end of the fastener 140 passes through the spring and is connected to the rail connector 130. It can be understood that the elastic part 150 can also be an elastic rubber ring or the like.

Referring to Fig. 6, in one embodiment, the quick installation pressing block further includes a washer 160. The washer 160 is sleeved on the fastener 140.

Referring to Fig. 3 and Fig .6, the lower end of the fastener 140 passes through the roof plate 110 and the support chucking part 120 in sequence and then connects to the rail connector 130. In this way, the various components in the quick installation pressing block are connected together to form an integrated structure. The various components can be connected together before using the quick installation pressing block, when using the quick installation pressing block to fix photovoltaic modules, there is no need to connect the various components together at the construction site, which is beneficial to improve the efficiency of installing photovoltaic modules. In addition, the integrated structure of the quick installation pressing block is also convenient for construction workers to carry.

Figs. 14-16 are schematic diagrams of the process of fixing photovoltaic modules using the quick installation pressing block in an embodiment. First, with reference to Fig. 1 and Fig. 2, the first frame 21 of the first photovoltaic module 20 is fixed on the rail 30 by using the first pressing block 10, the first pressing block 10 can be different from the quick installation pressing block, or it can be the quick installation pressing block, next, with reference to Fig. 13 and Fig. 14, the rail connector 130 is clamped on the rail 30, and other components in the quick installation pressing block that are connected to the rail connector 130 through the fasteners 140 are installed on the rail 30, next, as shown in Fig. 15 , tighten the fastener 140 so that the first pressing plate 111 applies downward pressure to the second frame 22 to fix the second frame 22 on the rail 30, as shown in Fig. 7 and Fig. 15, the first step structure 122a and the second step structure 122b are in contact with the rail 30, and the supporting part 122 can provide support for the second pressing plate 112, in this way, even if there is no photovoltaic module under the second pressing plate 112, the quick installation pressing block will not tilt to the right in Fig. 15, and the upper part of the protruding thorn 123b is above the upper surface 31, finally, as shown in Fig. 16, place the second photovoltaic module 40 on the rail 30, and push the second photovoltaic module 40 into the quick installation pressing block along the first direction D1, the protruding thorn 123b bends and deforms downward under the pressure of the lower frame 41a, and the protruding thorn 123b apply upward pressure to the first frame 41, thereby clamping the first frame 41. By analogy, continue to install the next photovoltaic module. When a certain photovoltaic module needs to be replaced, loosen the fasteners in the four quick installation pressing blocks that fix the photovoltaic modules and remove the roof plate in the quick installation pressing blocks to disassemble the photovoltaic module that needs to be replaced, after replacing the new photovoltaic modules, put the roof plate back on and tighten the fasteners.

Referring to Fig. 7, in some embodiments, the top of the protruding thorn 123b has a plurality of tooth-like structures 123b-1. The tooth structure 123b-1 can increase the friction between the protruding thorn 123b and the frame of the photovoltaic module.

Referring to Fig. 4, the second bottom surface 112a of the second pressing plate 112 is higher than the first bottom surface 111a of the first pressing plate 111. It should be noted that due to drawing limitations, it cannot be seen in Fig. 4 that the second bottom surface 112a of the second pressing plate 112 is higher than the first bottom surface 111a of the first pressing plate 111. Referring to Fig.4 and Fig. 15, a height difference between the second bottom surface 112a of the second pressing plate 112 and the first bottom surface 111a of the first pressing plate 111 is equal to or less than the height of a part of the protruding thorn 123b above the upper surface 31. Preferably, the height difference between the second bottom surface 112a and the first bottom surface 111a is less than the height of the part of the protruding thorn 123b above the upper surface 31. In this way, when the support chucking part 120 clamps the photovoltaic module frame, the deformation amount of the protruding thorn 123b is relatively large, thereby exerting greater pressure on the photovoltaic module frame.

Referring to Fig. 15 and Fig. 16, since the base plate 123a is below the upper surface 31, during the process of pushing the second photovoltaic module 40 into the quick installation pressing block along the first direction D1, the second photovoltaic module 40 will not be blocked by other components except the protruding thorn 123b, and the protruding thorn 123b will bend and deform downward under the squeeze of the second photovoltaic module 40, therefore, there is no need to lift the second photovoltaic module 40 when pushing the second photovoltaic module 40 into the quick installation pressing block along the first direction D1, and the first frame 41 can be directly pushed under the second pressing plate 112, on the one hand, this saves manpower, on the other hand, it can also improve construction efficiency.

In addition, when using the pressing blocks in the prior art to fix photovoltaic modules, construction workers cannot fix the pressing blocks between two adjacent photovoltaic modules on the bracket through one photovoltaic module, so the construction workers will step on the photovoltaic modules to reach the position where they can contact the pressing blocks to fix the pressing blocks on the bracket. In contrast to this application, by pushing the second photovoltaic module 40 into the quick installation pressing block along the first direction D1 to fix the second photovoltaic module 40, there is no need for construction workers to contact the quick installation pressing block between the two photovoltaic modules, this prevents construction workers from crossing the second photovoltaic module 40 to install the pressing block between the first photovoltaic module 20 and the second photovoltaic module 40, thereby preventing the construction workers from stepping on the photovoltaic modules.

Referring to Fig. 13, in one embodiment, the rail connector 130 further has a first blocking part 134 and a second blocking part 135. The left end of the first blocking part 134 connects to the first clamping part 131, and the right end of the first blocking part 134 extends toward the fastener 140. The right end of the second blocking part 135 connects to the second clamping part 133, and the left end of the second blocking part 135 extends toward the first clamping part 131. As shown in Fig. 13, when the fastener 140 is in a tightened state, the lower part of the fastener 140 is located between the first blocking part 134 and the second blocking part 135 in the third direction D3, the first blocking part 134 and/or the second blocking part 135 are in contact with the fastener 140, or the first blocking part 134 and the fastener 140 are separated by a first preset distance, the second blocking part 135 and the fastener 140 are separated by a second preset distance, the first preset distance and the second preset distance meet the following requirements, when the first clamping part 131 and/or the second clamping part 133 is bent and deformed toward the fastener 140, the first blocking part 134 and the second blocking part 135 contact the fastener 140 to prevent the first clamping part 131 and/or the second clamping part 133 from continuing to bend and deform, which would causes the rail connector 130 to separate from the rail 30, in short, the first preset distance and the second preset distance allow the first clamping part 131 and the second clamping part 133 to produce a certain deformation but do not allow the deformation amount of the two to be large enough to cause the rail connector 130 to separate from the rail 30.

The basic concepts have been described above. Obviously, for those skilled in the art, the above application disclosures are only examples and do not constitute limitations to the present application. Although not explicitly stated herein, those skilled in the art may make various modifications, improvements, and corrections to this application. Such modifications, improvements and corrections are suggested in this application, so such modifications, improvements and corrections still fall within the spirit and scope of the exemplary embodiments of this application.

Meanwhile, this application uses specific words to describe the embodiments of the application. For example, "one embodiment", "an embodiment", and/or "some embodiments" means a certain feature, structure or characteristic related to at least one embodiment of the present application. Therefore, it should be emphasized and noted that "one embodiment" or "an embodiment" or "an alternative embodiment" mentioned twice or more at different places in this specification does not necessarily refer to the same embodiment. In addition, certain features, structures or characteristics in one or more embodiments of the present application may be appropriately combined.

Similarly, it should be noted that, in order to simplify the presentation of the disclosure of the present application and thereby facilitate understanding of one or more embodiments of the present application, in the foregoing description of the embodiments of the present application, multiple features are sometimes combined into one embodiment, accompanying drawings or descriptions thereof. However, this method of disclosure does not imply that the subject matter of the application requires more features than are mentioned in the claims. In fact, embodiments may have less than all features of a single disclosed embodiment.

In some embodiments, numbers are used to describe the quantities of components and properties. It should be understood that such numbers used to describe the embodiments are modified by the modifiers "about", "approximately" or "substantially" in some examples. Unless otherwise stated, "about", "approximately" or "substantially" means that the stated number is allowed to vary by ±20%. Accordingly, in some embodiments, the numerical parameters used in the specification and claims are approximations that may vary depending on the desired features of the individual embodiment. In some embodiments, numerical parameters should account for the specified number of significant digits and use general digit preservation methods. Although the numerical fields and parameters used to confirm the breadth of the ranges in some embodiments of the present application are approximations, in specific embodiments, such numerical values are set as accurately as feasible.

Although the present application has been described with reference to the current specific embodiments, those of ordinary skill in the art should realize that the above embodiments are only used to illustrate the present application, and various equivalent changes or substitutions may also be made without departing from the spirit of the present application. Therefore, as long as the changes and modifications to the above-described embodiments are within the scope of the essential spirit of the present application, they will fall within the scope of the claims of the present application.

## Claims

1. A quick installation pressing block, **characterized by** comprising:
a roof plate (110) having a first pressing plate (111) and a second pressing plate (112) adjacent in a first direction;
a support chucking part (120) having an installation part (121), a supporting part (122) and a chucking part (123), wherein the installation part (121) and the chucking part (123) are respectively connected to two opposite ends of the supporting part (122) in a second direction, the installation part (121) and the chucking part (123) are respectively located on a left side and a right side of the supporting part (122) in the first direction, a lower end of the supporting part (122) is in contact with a rail; and
a fastener (140), wherein one end of the fastener (140) passes through the roof plate (110) and the installation part (121) in sequence and extends toward the rail, wherein when the chucking part (123) does not clamp a frame of a photovoltaic module, at least part of the chucking part (123) is above an upper surface of the rail.

2. The quick installation pressing block according to claim 1, **characterized in that** further comprising a rail connector (130), wherein the rail connector (130) connects to the rail, the one end of the fastener (140) passes through the roof plate (110) and the installation part (121) in sequence and connects to the rail connector (130).

3. The quick installation pressing block according to claim 1, **characterized in that** the roof plate (110) has a locating groove (113), an opening of the locating groove (113) faces the installation part (121), the support chucking part (120) has a locating boss (124), and the locating boss (124) protrudes toward the roof plate (110), the locating boss (124) is embedded in the locating groove (113).

4. The quick installation pressing block according to claim 1, **characterized in that** the roof plate (110) has a first through hole (114), the installation part (121) has a second through hole (121a), one end of the fastener (140) passes through the first through hole (114) and the second through hole (121a) in sequence and connects to the rail connector (130).

5. The quick installation pressing block according to claim 1, **characterized in that** the supporting part (122) has a first step structure (122a) and a second step structure (122b), the first step structure (122a) and the second step structure (122b) are located at a lower end of the supporting part (122) and are oppositely arranged in a third direction, wherein the first step structure (122a) and the second step structure (122b) are in contact with the rail.

6. The quick installation pressing block according to claim 1, **characterized in that** the rail connector (130) includes a first clamping part (131), a connecting part (132) and a second clamping part (133), the first clamping part (131) and the second clamping part (133) respectively connects to two opposite ends of the connecting part (132) in a third direction, the first clamping part (131) and the second clamping part (133) extend toward the rail, the first clamping part (131) and the second clamping part (133) are clamped with the rail.

7. The quick installation pressing block according to claim 6, **characterized in that** the connecting part (132) has an internal thread, the fastener (140) is bolted to the rail connector (130) through the internal thread.

8. The quick installation pressing block according to claim 6, **characterized in that** the rail connector (130) also has a first blocking part (134) and a second blocking part (135), one end of the first blocking part (134) connects to the first clamping part (131), another end the first blocking part (134) extends toward the second clamping part (133), one end of the second blocking part (135) connects to the second clamping part (133), another end of the second blocking part (135) extends toward the first clamping part (131).

9. The quick installation pressing block according to claim 8, **characterized in that** the first blocking part (134) and the second blocking port (135) abut against the fastener (140) to prevent the first clamping part (131) and/or the second clamping part (133) from detaching from the rail.

10. The quick installation pressing block according to claim 6, **characterized in that** the first clamping part (131) and the second clamping part (133) are elastic, the first clamping part (131) and the second clamping part (133) are squeezed to clamp protrusions in the rail into the grooves in the first clamping part (131) and the second clamping part (133) respectively.

11. The quick installation pressing block according to claim 1, **characterized in that** a bottom surface of the second pressing plate (112) is higher than a bottom surface of the first pressing plate (111), a height difference between the bottom surface of the second pressing plate (112) and the bottom surface of the first pressing plate (111) is equal to or less than a height of a part of the chucking part (123) above the upper surface of the rail.

12. The quick installation pressing block according to claim 1, **characterized by** further including an elastic part (150), one end of the elastic part (150) is in contact with the rail connector (130), and another end of the elastic part (150) is in contact with the support chucking part (120), the roof plate (110) or the fastener (140).

13. The quick installation pressing block according to claim 12, **characterized in that** the elastic part (150) includes a spring, and one end of the fastener (140) passes through the spring and connects to the rail connector (130).

14. The quick installation pressing block according to claim 1, **characterized in that** the chucking part (123) includes a base plate (123a) and a protruding thorn (123b), one end of the base plate (123a) connects to the supporting part (122), and anther end of the base plate (123a) extends away from the supporting part (122), one end of the protruding thorn (123b) connects to the base plate (123a), another end extends of the protruding thorn (123b) extends toward the second pressing plate (112), when the fastener (140) is in the tightened state and the clamping part (123) does not clamp the frame, the base plate (123a) is below or flushes with the upper surface of the rail, and at least part of the protruding thorn is above the upper surface of the rail.

15. The quick installation pressing block according to claim 14, **characterized in that** the protruding thorn (123b) is elastic.

16. The quick installation pressing block according to claim 1, **characterized in that** the clamping part (123) applies upward pressure to the frame to clamp the frame.
